# EUROPEAN PATENT SPECIFICATION

(11) **EP 2 440 585 B1**
(45) Date of publication and mention of the grant of the patent: **09.10.2013**
(21) Application number: 10721719.2
(22) Date of filing: 29.05.2010
(51) Int. Cl.: C08F 8/22

(54) **METHOD TO IMPROVE THE BARRIER PROPERTIES OF ETHYLENE POLYMER AGAINST PERMEATION OF HYDROCARBONS AND PLASTIC FUEL TANK HAVING IMPROVED BARRIER PROPERTIES**
VERFAHREN ZUR VERBESSERUNG DER BARRIEREEIGENSCHAFTEN VON ETHYLENPOLYMER GEGENÜBER DER DURCHDRINGUNG VON KOHLENWASSERSTOFFEN UND MIT VERBESSERTEN BARRIEREEIGENSCHAFTEN AUSGESTATTETER KUNSTSTOFFTANK
PROCÉDÉ D'AMÉLIORATION DES PROPRIÉTÉS DE BARRIÈRE D'UN POLYMÈRE D'ÉTHYLÈNE CONTRE LA PERMÉATION D'HYDROCARBURES, ET RÉSERVOIR DE COMBUSTIBLE EN PLASTIQUE QUI PRÉSENTE DES PROPRIÉTÉS DE BARRIÈRE AMÉLIORÉES

(30) Priority: 08.06.2009 EP 09007515; 17.06.2009 US 268880 P
(43) Date of publication of application: 18.04.2012
(73) Proprietor: Basell Polyolefine GmbH, 50389 Wesseling (DE)
(72) Inventor: BISSON, Peter, 67071 Ludwigshafen (DE); HOECKER, Bernd, 65203 Wiesbaden (DE); LINDNER, Thomas, 64846 Gross Zimmern (DE); SCHMITZ, Harald, 69469 Weinheim (DE)
(74) Representative: Herzog, Martin
(86) International application number: PCT/EP2010/003287
(87) International publication number: WO 2010/142390

(56) References cited:
- US-B1- 6 548 580
- FRIEDRICH J. ET AL.: "Fluorination of Polymer Surfaces" VAKUUM IN FORSCHUNG UND PRAXIS, vol. 14, no. 5, October 2002 (2002-10), pages 285-290, XP002590281
- KHARITONOV A.P., LOGINOV B.A.: "Dierct Fluorination of Polymer Final Products: From Fundamental Study to Practical Application" RUSSIAN JOURNAL OF GENERAL CHEMSITRY, vol. 79, no. 3, 2 May 2009 (2009-05-02), pages 635-641, XP002590282
- HAYES L. J., DIXON D.: "Solvent barrier Property for Fluorinated Polyethylene" JOURNAL OF APPLIED POLYMER SCIENCE, vol. 23, 1979, pages 1907-1913, XP002590283

## Description

The present invention relates to a new method for the improvement of the barrier properties of a hollow body made of ethylene homo- or copolymer against permeation of hydrocarbons. Such hydrocarbons are comprised in liquid fuels and mineral oil, whereby improved barrier properties are of predominant importance for the automotive industry, where plastic fuel tanks are comprised in automotive cars driven by combustion engines.

The invention also relates to articles of plastic and components for the transport and storage of liquid fuels such as plastic fuel tanks (PFT) for automotive vehicles driven by combustion engines, which are produced using ethylene homo- or copolymer compositions stabilized against permeation of hydrocarbons comprised in liquid fuels.

/ According to common practice in the art as described in DE-A-42 12 969, usually the inner surface of such articles of plastic is subjected to fluorination by means of any available fluorinating agents, mainly by elementary fluorine, however, such fluorination achieves a certain barrier level which is difficult to improve by further modifications in fluorination anyhow, at least not without increasing unduely the manufacturing costs.

It is the object of the present invention to provide a method to improve the barrier properties of a hollow body made of ethylene homo- or copolymer compositions against permeation of hydrocarbons comprised in liquid fuels, which hollow body is subjected on at least one surface to fluorination for producing articles of plastic and components for the storage and transport of liquid fuels.

We have found surprisingly that this object is achieved according to the instant invention by a method subjecting at least one surface of a hollow body to fluorination, whereby such hollow body is made of an ethylene homo- or copolymer comprising at least one sterically hindered amine compound in an amount ranging from 100 to 10 000 ppm, calculated on total weight of the polymer.

Another solution of the problem is the preparation of articles of plastic and components for the storage and for the transport of liquid fuels, such as heating oil tanks or chemical storage or transport containers, especially plastic fuel containers for automotive cars driven by combustion engines, from ethylene homo- or copolymer compositions comprising at least one sterically hindered amine compound by blow molding technology and to subject at least one surface to fluorination. In a preferred embodiment of the invention, the inner surface of the blow molded hollow article of plastic is subjected to fluorination.

Another solution of the problem is the use of at least one sterically hindered amine compound to improve the barrier properties of ethylene homo- or copolymer compositions subjected to fluorination.

Suitable sterically hindered amine compounds for the ethylene homo- and copolymers are preferably the sterically hindered amines themselves, however, their N-hydroxy- or N-oxylderivatives may also be useful and other stabilizers may be added in addition thereto, such as sterically hindered amines including other secondary amines whose substitution on the carbons adjacent to the amine nitrogen is such that no single hydrogen remains at these positions. Preference is given to derivatives of 2,2,6,6-tetramethylpiperidine, substituted either at the 4-position or on the amine nitrogen, and to derivatives of quinoline and of diphenylamine.

Some preferred amine compounds in the aforementioned sense are: 2,2,6,6-tetramethylpiperidine,
2,2,6,6-tetramethylpiperidine-4-ol,
2,2,6,6-tetramethylpiperidine-4-one,
2,2,6,6-tetramethylpiperidine-4-yl acetate,
2,2,6,6-tetramethylpiperidine-4-yl 2-ethylhexanoate,
2,2,6,6-tetramethylpiperidine-4-yl stearate,
2,2,6,6-tetramethylpiperidine-4-yl benzoate,
2,2,6,6-tetramethylpiperidine-4-yl 4-tert-butylbenzoate,
Bis(2,2,6,6-tetramethylpiperidine-4-yl) succinate,
Bis(2,2,6,6-tetramethylpiperidine-4-yl) adipate,
Bis(2,2,6,6-tetramethylpiperidine-4-yl) n-butylmalonate,
Bis(2,2,6,6-tetramethylpiperidine-4-yl) phthalate,
Bis(2,2,6,6-tetramethylpiperidine-4-yl) isophthalate,
Bis(2,2,6,6-tetramethylpiperidine-4-yl) terephthalate,
Bis(2,2,6,6-tetramethylpiperidine-4-yl) hexahydroterephthalate,
N,N' -bis(2,2,6,6-tetramethylpiperidine-4-yl)adipinamide,
N-(2,2,6,6-tetramethylpiperidine-4-yl)caprolactam,
N-(2,2,6,6-tetramethylpiperidine-4-yl)dodecylsuccinimide,
2,4,6-tris-[N-butyl-N-(2,2,6,6-tetramethylpiperidine-4-yl)]-s-triazine,
4,4' -ethylenebis(2,2,6,6-tetramethylpiperazine-3-one) and
tris(2,2,6,6- tetramethyl- 1- oxylpiperidine- 4- yl) phosphite
and the N-hydroxy and N-oxyl derivatives thereof, as well.

Especially, the ethylene homo- or copolymer composition of the instant invention comprises as sterically hindered amine compound either Chimassorb^{®} 944 or Tinuvin® 770 as sterically hindered amine compound. In a more preferred embodiment, however, the ethylene homo- or copolymer comprises a combination of these with other sterically hindered amine compound. In a most preferred embodiment it comprises the combination of Chimassorb 944 and Tinuvin 770 with each other.

The total amount of sterically hindered amine compound present as a combination of two different sterically hindered amine compounds in the polymer is defined as the sum of each single amount of each single stabilizer, whereby the ratio of the single amounts of the single stabilizers to each other ranges from 1 : 0,2 to 1 : 5, preferably from 1 : 0,5 to 1 : 2, based on weight- .

The sterically hindered amine compound Chimassorb 944 is thereby understood to have the following chemical formula: 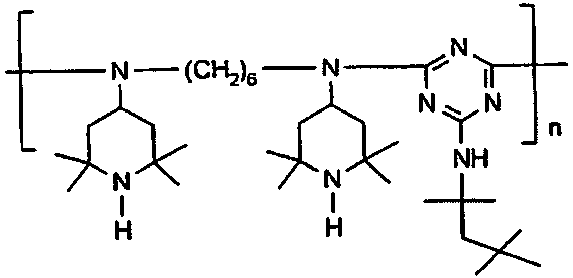 addressed as: poly[[6-(1,1,3,3-tetramethylbutyl)amino]1,3,5-triazin-2,4-diyl][2,2,6,6-tetramethyl-4-piperidinyl)imino]-1,6-hexandiyl[(2,2,6,6-tetramethyl-4-piperidinyl)imino]], whereby n is an integer ranging from 2 to 20.

The sterically hindered amine compound Tinuvin 770 has the following chemical composition: 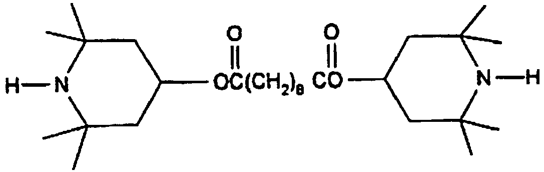 addressed as: is-(2,2,6,6-tetramethyl-4-piperidinyl)-sebacate.

We have also found articles of plastic and components for the transport and/or storage of mineral oil or chemicals or liquid fuels comprising hydrocarbons having improved barrier properties, if they are produced using such polymers comprising sterically hindered amines either alone or in combination and subjected on at least one surface to fluorination. A preferred ethylene homo- or copolymer compositions stabilized by adding a combination of the two sterically hindered amines Chimasorb 944 and Tinuvin 770 in an amount of from 200 to 5000 ppm, more preferred from 400 to 3000 ppm, calculated on total weight of the stabilized polymer, is used for an optimum improvement in combination with fluorination.

The ethylene homo- or copolymer composition used in a preferred embodiment of the invention comprise the combination of sterically hindered amines as such or it comprises their N-hydroxy or N-oxyl derivatives.

The term ethylene homo- or copolymer composition is understood to address a polymer comprising ethylene as a main component which has been prepared by polymerization under low pressure conditions in the presence of a suitable polymerization catalyst. Common catalysts for the polymerization of olefins are titanium based Ziegler catalysts or chromium based Philips catalysts. These catalysts are used world wide for the manufacture of polymers in world scale production plants. Other suitable catalysts are zirconium based metallocene catalysts which habe been developed within the last twenty years and which are now described in many publications world wide.

As co-monomers for the ethylene, other homologue olefins are suitable comprising from 3 to 10 carbon atoms, such as 1-propene, 1-butene, 1-pentene, 1-hexene, 1-heptene, 1-octene and 1-decene. The co-monomers may be present during the polymerization of the ethylene in an amount of from 1 to 8 % by weight, preferably from 2 to 7 % by weight, calculated on total weight of the monomers present in the reaction mix.

The polymerization takes place in a polymerization reactor, whereby different techniques are possible such as slurry polymerization in stirred vessels or in loop reactors or gas phase polymerization in stirred bed or fluidized bed reactors.

For use in the field of extrusion and blow molding, the polyethylene preferably has a melt flow rate MFR (190/21.6) of from 1 to 25 g/10 min, in particular from 2 to 20 g/10 min, and for use in the field of injection molding, an MFR (190/2.16) of from 0.1 to 100 g/10 min is preferred, in particular from 0.2 to 10 g/10 min.

Particularly suitable for use in accordance with the invention are ethylene homo- and copolymers having a density of from 0.930 to 0.970 g/cm³, in particular from 0.940 to 0.960 g/cm³, and, with particular advantage, the polymer employed is HDPE as normally used, for example, to produce PFTs.

The polyethylene normally includes additional substances for thermal and in-process stabilization. These substances, which may also be used in combination with the RME resistance stabilizers used in accordance with the invention, include sterically hindered phenols, which may also contain nitrogen and/or sulfur as heteroelements, lactones, which may also contain nitrogen and/or sulfur as heteroelements, organic esters of phosphorous acid (e.g. trialkyl phosphites), which may also contain nitrogen and/or sulfur as heteroelements, and alkali metal and alkaline earth metal stearates. Examples of stabilizers from the class of sterically hindered phenols are benzenepropanoic acid 3,5- bis (1,1- dimethylethyl)- 4- hydroxy- 2,2-bis[[3- [3,5- bis(1,1- dimethylethyl)- 4- hydroxyphenyl]-1-oxopropoxy]-methyl]- 1,3- propanediyl ester (IRGANOX 1010 from Ciba Additives GmbH), benzenepropanoic acid 3,5- bis(1,1- dimethylethyl)- 4-hydroxyloctadecyl ester (IRGANOX 1076 from Ciba Additives GmbH), 4-[[4,6- bis(octylthio)- 1,3,5- triazin- 2- yl]amino]- 2,6- bis(1,1-dimethylethyl)phenol (IRGANOX 565 from Ciba Additives GmbH), and N,N' - hexamethylenebis(3,5- di- tert.butyl- 4- hydroxyhydrocinnamamide) (IRGANOX 109 from Ciba Additives GmbH). Examples of stabilizers from the class of the lactones are benzofuran- 2- ones, such as 5,7- di- t- butyl- 3- (3,4- dimethylphenyl)- 3H- benzofuran- 2-one. Examples of stabilizers from the class of the organic phosphites are 2,4- bis(1,1- dimethylethyl)phenol phosphite (IRGANOX 16 from Ciba Additives GmbH) and phosphorous acid [1,1' - biphenyl]-4,4' - diylbis- , -tetrakis[2,4- bis(1,1- dimethylethyl)phenyl] ester.

The incorporation of the stabilizers into the polymers can take place, for example, during the production of a granular base material or during the melting operation in preparation for shaping, which can take place, for example, by extrusion, injection molding or blow molding.

The ethylene homo- or copolymer compositions used in accordance with the instant invention are outstandingly suited to the production of articles of plastic and components for the transport and storage of liquid fuels comprising hydrocarbons, especially also for liquid fuels comprising biodiesel in some amounts, as they have improved barrier properties against permeation of hydrocarbons, if fluorinated, in comparison with other ethylene homo- or copolymers not comprising the sterically hindered amine compounds of this invention, if fluorinated as well. y articles of plastic and components in this context are meant all the plastics parts which are exposed to the liquid fuels for a prolonged period, especially heating oil tanks, chemical storage or transport containers, plastic fuel tanks, but also parts such as pipes and feedlines, bottles, canisters, drums. Articles of plastic and components as described before may also comprise multilayered materials prepared par example according to the co-extrusion technique, wherein at least one layer is present comprising the ethylene homo- or copolymer of the instant invention.

The fluorination is performed preferably by elementary fluorine, however, mixed with an inert gas such as nitrogen or any noble gas, whereby also oxygen may be present in minor amounts up to 20 Vol.-%. Fluorine is thereby present in an amount of 0.5 to 10 Vol.-%, calculated on total volume of the gas mix. Preferably the inner surface of the plastic article is subjected to the fluorination after the thermoforming process either by blow molding or injection molding by introducing the gas mixture under a pressure of 1 to 20 bars at a gas temperature of from -20 to -190 °C, preferably from -20 to -100 °C, and maintaining the gas inside the blow molded article over a time period of from 10 s up to 10 min, preferably from 20 s to 8 min. The temperature of the inner surface of the hollow body made of the ethylene homo- or copolymer is thereby higher than the temperature of the fluorinating gas, as the reaction enthalpy is removed mainly by the fluorinating gas mix.

An especially advantageous embodiment of the invention is an integrated fluorination into the blow molding process, whereby especially the cold temperature of the fluorinating gas provides an additional cooling effect at the inner surface of the hollow article helping thereby to shorten the whole manufacturing process.

### ------------------------ WORKING EXAMPLES ------------------------

### (I) Measurement Methods:

I.V. expressed as [dl/g] = Intrinsic viscosity according to ISO1628 (at 130 °C, 0,001 g/ml Decalin);

Density expressed as [g/cm³] ISO 1183

HLMFR expressed as [g/10 min] (High Load Melt Flow Rate, measured at 190 °C and under a load of 21.6 kg) according to ISO 1133

Barrier properties according to mass loss of bottles (500 ml) filled with a mix of isooctane and toluene (1 to 1) comprising in addition 5 Vol.-% methanol after a certain time period.

Chimassorb^{®} 944 was purchased from Ciba Inc. and Tinuvin^{®} 770 DF from Ciba Inc. as well.

Irganox^{®} 1010 and Irgafos^{®} 168 were purchased from Ciba Inc.

### (II) Experimental part:

High molecular mass polyethylene produced in a gas phase process in the presence of a chromium based Phillips catalyst having a HLMFR (190 °C/21,6 kg) of 6 g/10 min and a density of 0,946 g/cm³ was treated with stabilizers as indicated in table 2. All polymers, except that of example 1 (comparison), were additionally stabilized with 400 ppm Irganox 1010 and 1100 ppm Irgafos 168. The powder was pelletized and stabilized in a ZSK53 extruder (Krupp Werner & Pfleiderer/Coperion, 1970) equipped with a dosing system for additivation.

**Machine parameters Table 1: W&P ZSK53**

| | |
|---|---|
| Screw diameter D [mm] | 2 x 53 |
| Screw length L [mm] | 1908 (36 x D) |
| Driving output [Kw] | 37 |
| Screw speed [Rotation/Minute] | 0-300 |
| max. Temperature [°C] | 300 |
| Throughput [kg/h] | 100 |

Polymer Stabilization Table 2:

**Table 1: Properties of pelletized samples; *) = not stabilized = comparison**

| | Stabilizer 1 | Amount [ppm] | Stabilizer 2 | Amount [ppm] | I.V. [dl/g] |
|---|---|---|---|---|---|
| Example 1*) | none | 0 | none | 0 | 3,1 |
| Example 2 | none | 0 | Tinuvin 770 DF | 1800 | 3,08 |
| Example 3 | Chimassorb 944 | 1800 | none | 0 | 2,97 |
| Example 4 | Chimassorb 944 | 900 | Tinuvin 770 DF | 900 | 3,05 |

From the pellets prepared in accordance with working examples 1 through 4 bottles having a planar bottom have been prepared by blow molding in a blow molding tool. The bottles had a volume of 500 ml. The bottles have been prepared at an inner pressure of 10 bars at a melt temperature of 195 °C and had a wall thickness of 1 mm, each. At a wall temperature within the range of from 90 to 100 °C the pressure was lowered to 2 bars and the fluorinating gas was introduced under a pressure of 10 bars.

As fluorinating gas a mix of 1 Vol.-% F₂, 2.6 Vol-% O₂ and 96.4 Vol.-% N₂ was employed having a temperature of -100 °C. After a contact time of 60 sec the fluorinating gas was removed by nitrogen. All bottles have been filled with 450 ml of a commercial super fuel having a methanol content of 3 Vol-.%. The bottles were closed gass tight and their exact weight was noted. Thereafter they were stored over a time period of 10 days, 20 days, 40 days and 60 days at a temperature of 50 °C in a heating chamber. After each time period their exact weight has been taken again and was compared with the noted weight of each bottle. The result is illustrated I the following table 3.

Mass loss [g] after different time period of storage, Table 3:

| Storage Time | Example 1 | Example 2 | Example 3 | Example 4 |
|---|---|---|---|---|
| 10 days | 5 g | 3 g | 3,5 g | 1,5 g |
| 20 days | 9 g | 5 g | 5,5 g | 2,5 g |
| 40 days | 16 g | 7,5 g | 8 g | 4 g |
| 60 days | 22 g | 10,5 g | 11,5 g | 6,5 g |

Considering the results of the permeation tests as described above, it becomes clearly apparent that the presence of sterically hindered amine compounds in the ethylene polymer improves the barrier properties in combination with the fluorinating treatment significantly.

## Claims

1. A method to improve the barrier properties of a hollow body made of ethylene homo-or copolymer compositions against permeation of hydrocarbons, wherein the ethylene homo- or copolymer comprises at least one sterically hindered amine compound in an amount of from 100 to 10 000 ppm, calculated on total weight of the polymer, and wherein at least one surface of the hollow body made of said ethylene homo- or copolymer is subjected to fluorination.

2. Method according to claim, wherein the amount of the sterically hindered amine compound ranges from 200 to 5000 ppm, calculated on total weight of the polymer.

3. Method according to claim 1, wherein the amount of the sterically hindered amine compound ranges from 400 to 3000 ppm, calculated on total weight of the stabilized polymer.

4. Method according to one or more of claims 1 to 3, wherein the ethylene homo- or copolymer composition comprises the sterically hindered amine compounds or their N-hydroxy- or N-oxylderivatives.

5. Method according to one or more of claims 1 to 4, wherein the ethylene homo- or copolymer composition comprises a combination of at least two sterically hindered amine compounds or their N-hydroxy- or N- oxylderivatives.

6. Method according to one or more of claims 1 to 5, wherein at least one of the sterically hindered amine compounds has the chemical formula: 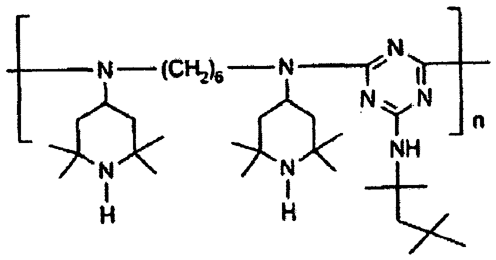 wherein n is an integer ranging from 2 to 20.

7. Method according to one or more of claims 1 to 5, wherein at least one of the sterically hindered amine compounds has the chemical formula:

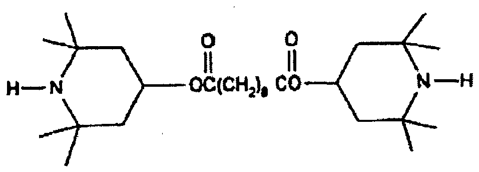

8. Method according to one or more of claims 1 to 7, wherein the polymer comprises in addition other stabilizers such as sterically hindered amines including all secondary amines whose substitution on the carbons adjacent to the amine nitrogen is such that any single hydrogen does not remain at these positions, whereby preference is given to derivatives of 2,2,6,6- tetramethylpiperidine, substituted either at the 4-position or on the amine nitrogen, and to derivatives of quinoline and of diphenylamine.

9. Method according to one or more of claims 1 to 8, wherein the inner surface of a hollow body made by the polymer is subjected to fluorination by a gas mixture comprising fluorine and nitrogen or a noble gas or oxygen under a pressure of 5 to 20 bars at a temperature of from -20 to -190 °C over a time period of from 10 s to 10 min.

10. Method according to one or more of claims 1 to 9, wherein the gas mixture comprises fluorine in an amount of from 0.5 to 10 Vol.-%, and optionally oxygen in an amount of up to 10 Vol.-%.

11. The use of sterically hindered amine compounds to improve hollow bodies made of an ethylene homo- or copolymer composition against permeation of hydrocarbons comprised therein after treatment of at least one surface of such hollow bodies by fluorination, whereby at least one sterically hindered amine compound has the chemical formula: 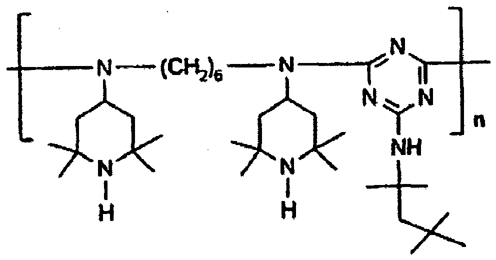 wherein n represents an integer in the range of from 2 to 20 or whereby at least one sterically hindered amine compound has the chemical formula:

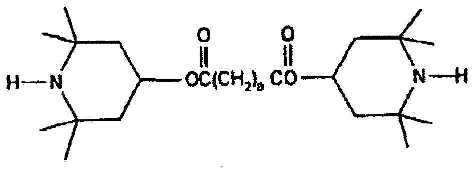

12. Articles of plastic and components for the transport and storage of liquid fuels comprising biodiesel, such as vegetable oil esters, or methanol, preferably plastic fuel tanks for automotive vehicles or heating oil tanks or chemical storage or transport containers produced by the method according to one or more of claims 1 to 10.

## Patentansprüche

1. Verfahren zum Verbessern der Barriereeigenschaften eines Hohlkörpers, der aus Ethylenhomo- oder -copolymerzusammensetzungen hergestellt ist, gegen die Permeation von Kohlenwasserstoffen, wobei das Ethylenhomo- oder -copolymer mindestens eine sterisch gehinderte Aminverbindung in einer Menge von 100 bis 10 000 ppm, mit Bezug auf das Gesamtgewicht des Polymers berechnet, umfasst und wobei mindestens eine Oberfläche des Hohlkörpers, der aus dem Ethylenhomo- oder -copolymer hergestellt ist, einer Fluorierung unterworfen wird.

2. Verfahren nach Anspruch 1, wobei die Menge der sterisch gehinderten Aminverbindung im Bereich von 200 bis 5000 ppm, mit Bezug auf das Gesamtgewicht des Polymers berechnet, liegt.

3. Verfahren nach Anspruch 1, wobei die Menge der sterisch gehinderten Aminverbindung im Bereich von 400 bis 3000 ppm, mit Bezug auf das Gesamtgewicht des stabilisierten Polymers berechnet, liegt.

4. Verfahren nach einem oder mehreren der Ansprüche 1 bis 3, wobei die Ethylenhomo- oder -copolymerzusammensetzung die sterisch gehinderten Aminverbindungen oder ihre N-Hydroxy- oder N-Oxylderivate umfasst.

5. Verfahren nach einem oder mehreren der Ansprüche 1 bis 4, wobei die Ethylenhomo- oder -copolymerzusammensetzung eine Kombination von mindestens zwei sterisch gehinderten Aminverbindungen oder ihrer N-Hydroxy- oder N-Oxylderivate umfasst.

6. Verfahren nach einem oder mehreren der Ansprüche 1 bis 5, wobei mindestens eine der sterisch gehinderten Aminverbindungen die chemische Formel: 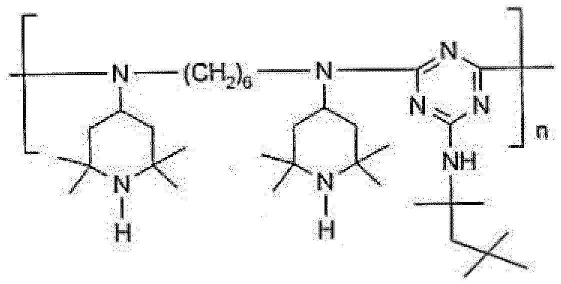 aufweist, wobei n eine ganze Zahl im Bereich von 2 bis 20 ist.

7. Verfahren nach einem oder mehreren der Ansprüche 1 bis 5, wobei mindestens eine der sterisch gehinderten Aminverbindungen die chemische Formel: 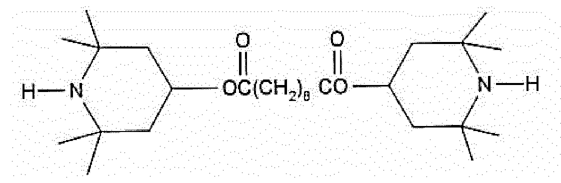 aufweist.

8. Verfahren nach einem oder mehreren der Ansprüche 1 bis 7, wobei das Polymer zusätzlich andere Stabilisatoren, wie sterisch gehinderte Amine, einschließlich aller sekundären Amine umfasst, deren Substitution an den Kohlenstoffen neben dem Aminstickstoff derart ist, das kein einzelner Wasserstoff an diesen Positionen verbleibt, wobei Derivaten von 2,2,6,6- Tetramethylpiperidin, die entweder in Position 4 oder am Aminstickstoff substituiert sind, und Derivaten von Chinolin und von Diphenylamin der Vorzug gegeben wird.

9. Verfahren nach einem oder mehreren der Ansprüche 1 bis 8, wobei die Innenfläche eines Hohlkörpers, der aus dem Polymer hergestellt ist, einer Fluorierung durch eine Gasmischung, die Fluor und Stickstoff oder ein Edelgas oder Sauerstoff umfasst, unter einem Druck von 5 bis 20 bar bei einer Temperatur von -20 bis -190 °C über eine Zeitspanne von 10 s bis 10 min unterworfen wird.

10. Verfahren nach einem oder mehreren der Ansprüche 1 bis 9, wobei die Gasmischung Fluor in einer Menge von 0,5 bis 10 Vol.-% und wahlweise Sauerstoff in einer Menge von bis zu 10 Vol.-% umfasst.

11. Verwendung von sterisch gehinderten Aminverbindungen zum Verbessern von Hohlkörpern, die aus Ethylenhomo- oder -copolymer-zusammensetzungen hergestellt sind, gegen die Permeation von darin enthaltenen Kohlenwasserstoffen, nach Behandeln mindestens einer Oberfläche derartiger Hohlkörper durch Fluorierung, wobei mindestens eine sterisch gehinderte Aminverbindung die chemische Formel: 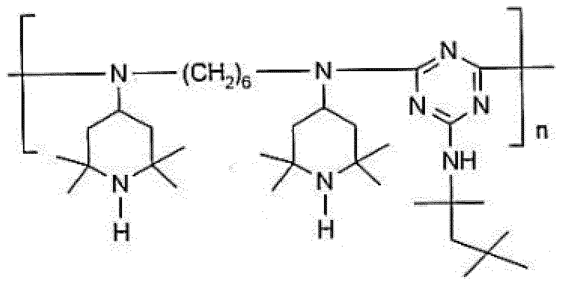 aufweist, wobei n eine ganze Zahl im Bereich von 2 bis 20 darstellt oder wobei mindestens eine sterisch gehinderte Aminverbindung die chemische Formel: 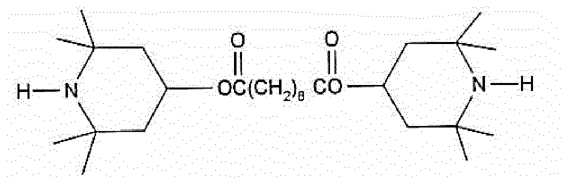 aufweist.

12. Artikel aus Kunststoff oder Komponenten für den Transport und die Lagerung von flüssigen Kraftstoffen umfassend Biodiesel, wie beispielsweise Pflanzenölester, oder Methanol, bevorzugt Kunststoffkraftstofftanks für Fahrzeuge oder Heizöltanks oder chemische Lager- oder Transportbehälter, die durch das Verfahren nach einem der Ansprüche 1 bis 10 hergestellt werden.

## Revendications

1. Procédé destiné à l'amélioration des propriétés de barrière, contre la perméation d'hydrocarbures, d'un corps creux, fabriqué à partir de compositions d'homopolymère ou de copolymère d'éthylène, comprenant au moins un composé d'amine stériquement encombrée en une quantité de 100 à 10 000 ppm, calculés sur le poids total du polymère, et au moins une surface du corps creux fabriqué à partir dudit homopolymère ou copolymère d'éthylène étant soumise à la fluoration.

2. Procédé selon la revendication 1, la quantité du composé d'amine stériquement encombrée s'étendant de 200 à 5000 ppm, calculés sur le poids total du polymère.

3. Procédé selon la revendication 1, la quantité du composé d'amine stériquement encombrée s'étendant de 400 à 3000 ppm, calculés sur le poids total du polymère stabilisé.

4. Procédé selon l'une ou plusieurs des revendications 1 à 3, la composition d'homopolymère ou de copolymère d'éthylène comprenant les composés d'amine stériquement encombrée ou leurs dérivés N-hydroxy ou N-oxyle.

5. Procédé selon l'une ou plusieurs des revendications 1 à 4, la composition d'homopolymère ou de copolymère d'éthylène comprenant une combinaison d'au moins deux composés d'amine stériquement encombrée ou de leurs dérivés N-hydroxy ou N-oxyle.

6. Procédé selon l'une ou plusieurs des revendications 1 à 5, au moins un des composés d'amine stériquement encombrée présentant la formule chimique : 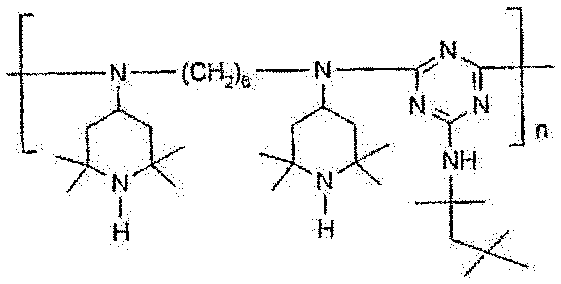 où n représente un entier dans la plage de 2 à 20,

7. Procédé selon l'une ou plusieurs des revendications 1 à 5, au moins un des composés d'amine stériquement encombrée présentant la formule chimique :

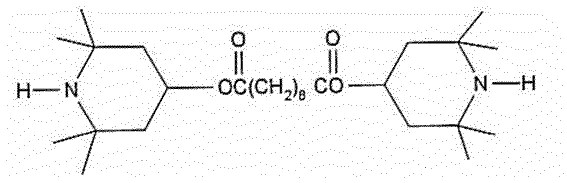

8. Procédé selon l'une ou plusieurs des revendications 1 à 7, le polymère comprenant en plus d'autres stabilisants tels que des amines stériquement encombrées incluant toutes les amines secondaires dont la substitution sur les carbones adjacents à l'azote de l'amine est telle que pas un seul hydrogène ne reste à ces positions, la préférence étant donnée à des dérivés de 2,2,6,6-tétraméthylpipéridine, substituée soit en position 4, soit sur l'azote de l'amine, et à des dérivés de quinoléine et de diphénylamine.

9. Procédé selon l'une ou plusieurs des revendications 1 à 8, la surface interne d'un corps creux fabriqué à partir du polymère étant soumise à une fluoration par un mélange gazeux comprenant du fluor et de l'azote ou un gaz noble ou de l'oxygène sous une pression de 5 à 20 bars à une température de -20 à -190°C pendant un laps de temps de 10 s à 10 min.

10. Procédé selon l'une ou plusieurs des revendications 1 à 9, le mélange gazeux comprenant du fluor en une quantité de 0,5 à 10% en volume et, éventuellement, de l'oxygène en une quantité de jusqu'à 10% en volume.

11. Utilisation de composés d'amine stériquement encombrée pour améliorer des corps creux fabriqués à partir d'une composition d'homopolymère ou de copolymère d'éthylène contre la perméation d'hydrocarbures compris dans ceux-ci après traitement d'au moins une surface de tels corps creux par fluoration, au moins un composé d'amine stériquement encombrée présentant la formule chimique : 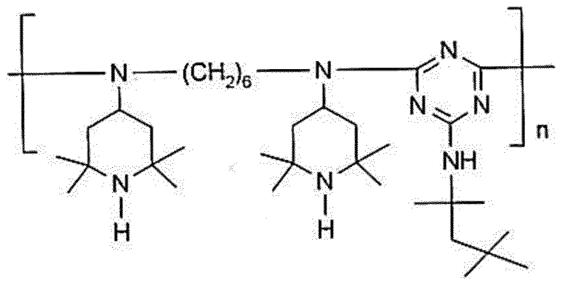 où n représente un entier dans la plage de 2 à 20, ou au moins un composé d'amine stériquement encombrée présentant la formule chimique:

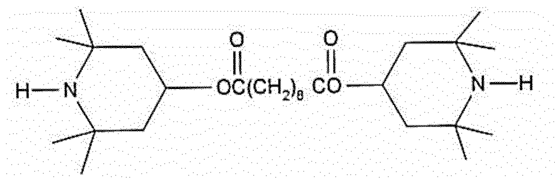

12. Objets en plastique et composants destinés au transport et à l'entreposage de carburants liquides comprenant le biodiesel, tel que les esters d'huile végétale, ou le méthanol, de préférence des réservoirs de carburant en plastique destinés à des véhicules automobiles ou des réservoirs de mazout ou des récipients d'entreposage ou de transport de produits chimiques, produits par le procédé selon l'une ou plusieurs des revendications 1 à 10.
